# DEMANDE DE BREVET EUROPEEN

(11) **EP 0 895 340 A1**
(43) Date de publication de la demande: **03.02.1999**
(21) Numéro de dépôt: 97113200.6
(22) Date de dépôt: 31.07.1997
(51) Int. Cl.: H02M 7/00

(54) **Convertisseur courant-continu/courant alternatif de puissance pour véhicule électrique**

(71) Demandeur: Scholl Sun Power SSP S.A., 1214 Vernier (CH)
(72) Inventeur: Scholl, Pierre, 1214 Vernier (CH); Berthoud, Patrick, Thorens les Glieres (FR)
(74) Mandataire: Moinas, Michel

(57) **Abrégé**

L'invention est relative à un convertisseur courant-continu/courant-alternatif de puissance pour véhicule électrique à moteur alternatif triphasé alimenté à partir de batteries. Chaque circuit de commutation de l'étage de puissance est constitué par un groupe identique de transistors (32) montés en parallèle. Tous les transistors sont implantés selon un ou plusieurs triplets de paires de lignes parallèles, une paire de lignes pour chaque phase, au dos d'un radiateur (50) commun de telle sorte que, pour chaque phase, les points communs des transistors soient reliés à une première barre métallique (100A, 100B, 100C) adjacente et fixée à un premier niveau sur le radiateur, que les points d'alimentation d'un premier groupe de transistors soient reliés à une première barrette métallique (110) matérialisant la première ligne d'alimentation fixée à un second niveau sur le radiateur, que les points d'alimentation du second groupe de transistors soient reliés à une seconde barrette métallique (120) matérialisant la seconde ligne d'alimentation fixée au même second niveau ou à un troisième niveau sur le radiateur. Chacun des deux triplets de barrettes est relié en forme de E par une barrette transversale (130), ce E étant agencé en vis-à-vis soit bout-à-bout soit imbriqué l'un dans l'autre.

## Description

La présente invention est relative à un convertisseur courant-continu/courant-alternatif de puissance pour véhicule électrique à moteur alternatif triphasé alimenté à partir de batteries.

L'emploi d'un moteur électrique alternatif, notamment asynchrone, s'avère plus intéressant que d'autres moteurs électriques connus, du fait de sa souplesse et son rendement. De plus, la simplicité de la structure du rotor monobloc réalisé à partir de feuillard et d'un stator contenant à lui seul les bobines d'induction font que ce moteur est particulièrement fiable, nécessite peu d'entretien, ce qui est particulièrement avantageux pour un véhicule automobile. Toutefois, ne pouvant actuellement stocker l'énergie électrique que sous forme de courant continu dans une pluralité de batteries, il convient de prévoir nécessairement un convertisseur de courant-continu/courant-alternatif apte à être traversé par un courant maximum potentiel très important de l'ordre de 160 Ampères efficaces.

Les convertisseurs utilisés à ce jour sont basés sur un étage de puissance comprenant, pour chaque phase, une paire de transistors montés en "push-pull", c'est-à-dire en série, entre la borne positive et la borne négative de l'alimentation de courant, combinés à un circuit de pilotage des transistors faisant que chacun d'eux est alternativement en l'état de conduction. On obtient alors, sur le point de liaison reliant l'émetteur du premier transistor au collecteur du second transistor, également appelé "point commun", un courant alternatif. Le circuit de pilotage est lui-même sous le contrôle d'un circuit permettant de moduler le courant traversant l'étage de puissance en fonction de paramètres externes (position de la pédale de gaz, ...) et ce à partir d'un signal de retour (feed-back) issu d'un module de lecture du courant traversant effectivement une ligne de phase de sortie. Les phases de sortie sont elles-mêmes reliées au moteur asynchrone au travers d'un circuit d'interrupteurs permettant un démarrage en étoile puis un fonctionnement en triangle.

Le courant maximum pouvant traverser un transistor actuel étant de l'ordre de 40 Ampères efficaces, on atteint la puissance désirée en remplaçant chacun des transistors constituant le push-pull par un groupe de trois, quatre, six ou huit transistors identiques montés ensemble en parallèle, les intensités maximum s'additionnant alors.

Pour réaliser des convertisseurs de puissance, on connaît des modules de puissance regroupant, dans un même boîtier, une pluralité de transistors déjà montés en parallèle. Toutefois, ces blocs de puissance sont particulièrement onéreux et s'avèrent limités dans leurs performances, ceci étant dû à une évacuation insuffisante de la chaleur dégagée notamment lors de la commutation des deux groupes de transistors.

Par ailleurs, l'emploi d'une pluralité de transistors individuels, présentant chacun de meilleures performances électroniques, notamment quant à la rapidité de commutation, diminuant d'autant les pertes d'énergie dissipées par chaleur, se heurte au problème de la réalisation pratique de l'implantation de cette multitude de composants sur une carte complétée de moyens d'évacuation de la chaleur, tels que radiateurs, et supportant également des circuits et composants adjacents, tels que circuits de pilotage, condensateurs de rappel, diodes de roue libre et autres. Il faut alors résoudre trois problèmes distincts : l'implantation de chaque composant de telle sorte qu'il reste raisonnablement accessible en cas de réparation, la réalisation de liaisons suffisamment larges (éventuellement renforcées) pour être aptes à passer de fortes intensités, ainsi qu'une disposition laissant au radiateur un espace suffisamment dégagé pour permettre une bonne évacuation de la chaleur, si possible par simple convection afin d'éviter l'adjonction d'un ventilateur.

Ces buts mentionnés précédemment sont réalisés, selon l'invention, par un convertisseur courant-continu/courant-alternatif de puissance pour un véhicule électrique à moteur alternatif triphasé alimenté à partir de batteries comprenant :
- un étage de puissance formé, pour chaque phase, par une paire de circuits électroniques de commutation montés en série entre une première ligne positive et une seconde ligne négative ou neutre d'alimentation en courant continu du dispositif, leur point commun constituant la ligne de phase,
- un circuit de pilotage pour chaque phase pilotant les circuits de commutation de telle sorte que chacun soit alternativement en l'état de conduction, et
- un circuit de contrôle variant l'action du circuit de pilotage pour moduler le courant traversant l'étage de puissance en fonction de paramètres externes dont la position d'une pédale d'accélérateur,
   du fait que chacun des circuits de commutation de l'étage de puissance est constitué d'un groupe identique de transistors montés en parallèle,
   et du fait que les groupes de transistors sont implantés selon un ou plusieurs triplets de paires de lignes parallèles, une paire de lignes pour chaque phase, au dos d'un radiateur commun de telle sorte que, pour chaque phase,
      - les points communs des deux groupes de transistors soient reliés à une première barre métallique adjacente matérialisant une ligne de phase et fixée à un premier niveau sur le radiateur,
      - les points d'alimentation du premier groupe de transistors soient reliés à une première barrette métallique matérialisant la première ligne d'alimentation fixée à un second niveau sur le radiateur, et agencée parallèlement à la première barre,
      - les points d'alimentations du second groupe de transistors soient reliés à une seconde barrette métallique matérialisant la seconde ligne d'alimentation fixée au même second niveau ou en un troisième niveau sur le radiateur, et agencée parallèlement à la première barre,
      - chacun des deux triplets de barrettes étant respectivement relié en forme de E par une barrette transversale.

L'implantation en ligne des transistors et des diodes de puissance au dos d'un large radiateur unique, ces composants électroniques étant respectivement reliés d'une part à une barre parallèle adjacente et d'autre part à l'une des deux barrettes supérieures alignées avec la première barre, ces barrettes étant également fixées fermement au dos du radiateur, permet une réalisation industrielle fiable et de coût raisonnable pour cet étage de puissance de convertisseur. En effet, les soudures des pattes des transistors ou diodes sur les barrettes peuvent s'effectuer proprement à une température suffisamment haute sans pour autant risquer de détruire d'autres composants annexes du circuit. Chaque composant électronique de puissance étant directement monté sur un radiateur, il suffit alors d'orienter les ailettes de refroidissement arrière vers un volume suffisamment dégagé pour qu'une convection naturelle s'effectue.

Selon un premier mode de réalisation, deux triplets de barrettes reliés en forme de E sont agencés en vis-à-vis et bout-à-bout, la première barrette métallique d'une phase étant agencée dans l'alignement de la première moitié de la première barre de la phase, et la seconde barrette métallique de cette phase étant agencée dans l'alignement de la seconde moitié de la première barre et dans le prolongement de sa première barrette.

Cette implantation met bien en évidence l'appartenance de chaque groupe de transistors à sa phase respective, et de chaque transistor au sein de son groupe, ce qui en facilite le repérage lors d'une réparation.

Avantageusement alors, la puissance utile du convertisseur peut être doublée très simplement lorsque tous les transistors sont implantés selon un double triplet de paires de lignes parallèles au dos d'un radiateur commun, une paires de deux lignes pour chaque phase, chaque ligne étant située de part et d'autre de sa barrette correspondante.

Selon un second mode de réalisation, les triplets de barrettes reliés en forme de E sont agencés en vis-à-vis et imbriqués l'un dans l'autre, une première barrette métallique d'une phase étant agencée d'un premier côté de la première barre de cette phase, et la seconde barrette métallique de cette phase étant agencée de l'autre côté de la première barre de cette phase.

Par rapport au premier mode de réalisation, cet agencement est moins large mais plus long, ce qui s'avère plus commode dans certains cas.

Avantageusement, les diodes fonctionnant lorsque le véhicule se déplace en roues libres, branchées en parallèle à un groupe de transistors, sont matériellement implantées dans chaque ligne, et ce intercalées au milieu de chaque groupe de transistors.

Selon une première variante avantageuse, une carte supportant un triplet de circuits de pilotage est placée directement sur le radiateur peu au dessus des barrettes de niveau supérieur.

La carte peut supporter, de plus, des modules de lecture du courant de sortie sur une phase. Cette carte peut également supporter des condensateurs de rappel branchés entre les premières et deuxièmes lignes d'alimentation de chaque phase. Une telle carte de support, dont la superficie peut être du tiers voire de la moitié du radiateur, peut être implantée très fermement sur celui-ci. Il est possible d'y monter orthogonalement trois circuits de pilotage, un pour chaque phase, et de relier la base de chaque transistor d'un groupe à ses cartes correspondantes par des faisceaux électriques distincts et courts. On résout alors élégamment le problème du respect de l'accessibilité de chacun des composants individuels.

L'invention sera mieux comprise à l'étude d'un mode de réalisation du convertisseur selon l'invention pris à titre d'exemple nullement limitatif, et décrit par les figures suivantes, dans lesquelles
- la figure 1 est un schéma de principe du convertisseur courant-continu/courant-alternatif alimentant un moteur asynchrone de véhicule électrique ;
- la figure 2 illustre schématiquement un premier mode d'implantation de 36 composants de puissance appartenant à l'étage de puissance du convertisseur sur un radiateur unique,
- la figure 3 illustre schématiquement l'implantation de 64 composants électroniques de puissance selon le premier mode de réalisation sur un même radiateur,
- la figure 4 illustre schématiquement l'implantation de composants complémentaires sur une carte de support prévue pour être installée sur le dessus du radiateur des figures 2 et 3.
- la figure 5 illustre schématiquement l'implantation de 24 composants de puissance sur un radiateur selon un second mode de réalisation, et
- la figure 6 est une coupe transversale du second mode de la figure 5.

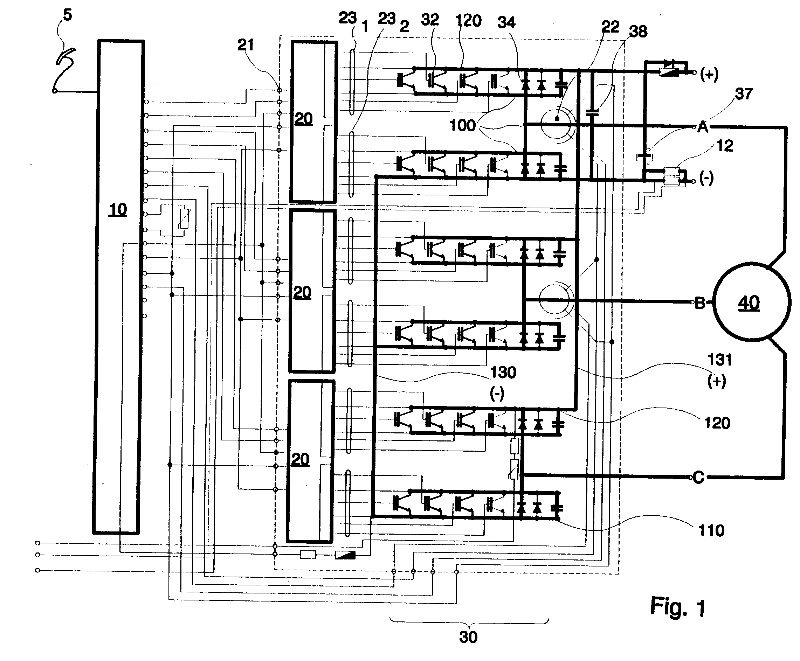

Dans le plan schématique du convertisseur représenté sur la figure 1, on reconnaît les deux bornes d'alimentation "-" et "+" de courant continu branchées directement sur le groupe de batteries du véhicule électrique. Sur la ligne "+" est intercalé un fusible protégé par une diode, et, entre ces deux lignes, est également installé un condensateur important de régulation 37.

Ces deux bornes alimentent respectivement un circuit de commande 10, un étage de pilotage composé de trois circuits de pilotage 20, et un étage de puissance 30 formé de trois sous-ensembles, un pour chaque phase A, B et C d'un moteur asynchrone 40, chacun comportant deux groupes de quatre transistors 32 montés en parallèle, les paires de groupes étant montées en push-pull entre une ligne d'alimentation "+" et une ligne d'alimentation "-".

De manière schématique, le circuit de commande 10 reçoit, d'une part, un signal électrique représentatif de la position de la pédale dite "de gaz" 5, et d'autre part, un signal des résistances de shunt 12, montées en série à l'entrée de la ligne "-" mesurant l'intensité du courant venant des batteries, ainsi que deux signaux issus de modules de lecture 22 de courant alternatif de sortie sur les phases A et B. Le circuit de commande 10 est directement relié par des liaisons 21 à chacun des trois circuits de pilotage 20.

Chaque circuit de pilotage 20 comprend deux sous-circuits reliés par des faisceaux 23₁ et 23₂ respectivement à la base des transistors du groupe supérieur et la base des transistors du groupe inférieur du montage "push-pull" de la phase correspondante. Le collecteur des transistors du groupe supérieur est relié à la ligne positive 120, les émetteurs du groupe de transistors inférieurs sont reliés à la ligne négative 110, et les émetteurs des transistors supérieurs sont conjointement reliés au collecteur des transistors du groupe inférieur à une ligne commune de phase 100A,B,C. Les trois lignes positives 120 sont reliées ensemble par une ligne 131, alors que les trois lignes négatives 110 sont reliées ensemble par une ligne 130 Des diodes 34, montées en parallèle entre les transistors 32 assurent un retour du courant.

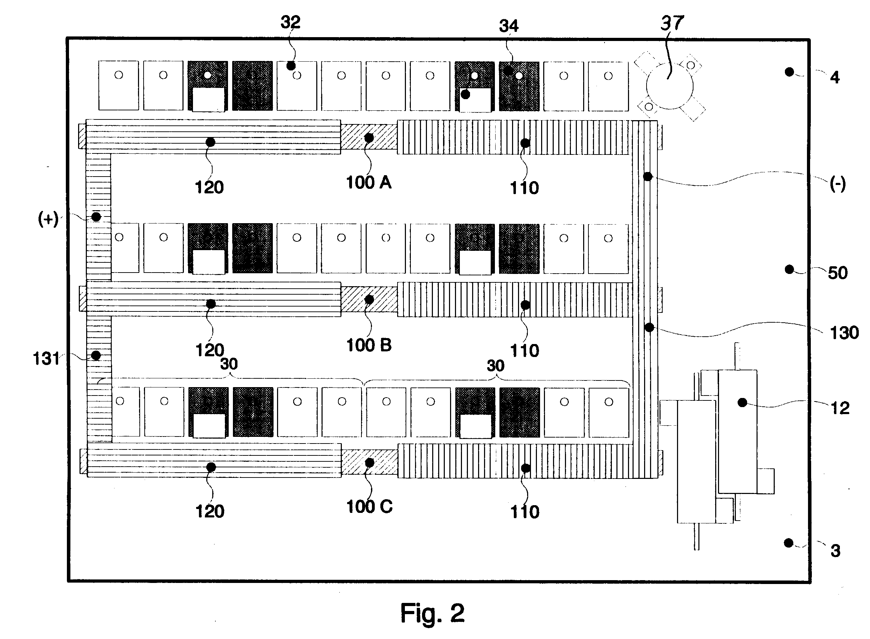

La figure 2 illustre un premier mode d'implantation, selon l'invention, des transistors 32 et des diodes 34 de l'étage de puissance 30 sur le dos d'un radiateur 50.

Sur cette face plane arrière de radiateur 50 sont d'abord installées trois barres de cuivre parallèles équidistantes 100A, 100B et 100C matérialisant les trois lignes de phases. Ces barres sont, par exemple, fixées à l'aide d'isolateurs à une hauteur de l'ordre de 2 à 4mm.

Au dessus et sur la moitié droite de chaque barre 100 sont installées, parallèlement, des demi-barrettes 110 de cuivre reliées ensemble en leurs extrémités droites par une traverse 130 constituant une connexion rigide sous la forme d'un E inversé. Cette liaison en E est reliée directement à la borne négative de l'alimentation en courant continu.

De manière symétrique, trois demi-barrettes 120 de cuivre sont installées directement au dessus de la moitié gauche des barres inférieures 100A,B,C, et elles sont reliées ensemble en leurs extrémités gauches par une traverse 131 formant ainsi une liaison en E. Cette liaison est reliée directement à la borne positive de l'alimentation en courant continu.

Alors, comme illustré sur la figure 2, on peut aisément installer, pour chaque phase, le premier groupe de transistors 32 selon une ligne à droite et, dans le prolongement direct, le second groupe de transistors selon une ligne à gauche, chaque groupe étant ensuite soudé à la barre inférieure adjacente et à sa demi-barrette supérieure adjacente correspondante réalisant ainsi un branchement en push-pull. Ceci permet de réaliser des soudure de pattes aux barre et barrette correspondantes de manière aisée et propre.

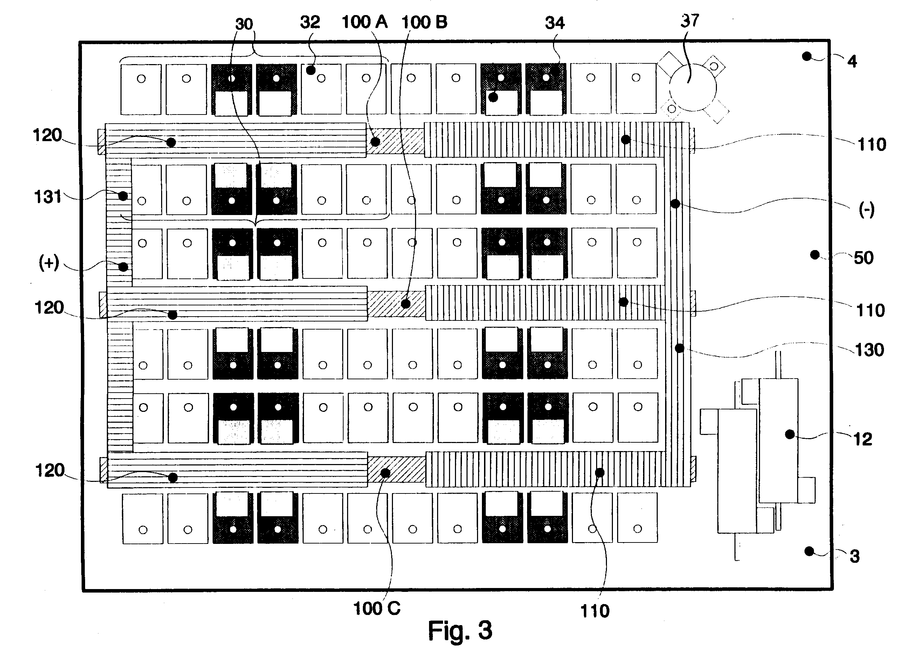

Sur la figure 3 est illustrée l'implantation de l'étage de puissance pour un convertisseur deux fois plus puissant, chaque phase matérialisée par une barre 100A,B,C étant entourée de part et d'autre des composants électroniques de puissance. On peut ainsi envisager la conversion de courant de l'ordre de 300 Ampères. Comme précédemment, chaque transistor 32 est aisément accessible individuellement.

Dans le mode de réalisation décrit, les transistors 32 sont de type IGBT (Insulated Gate Bipolar Transistor) tels que ceux commercialisés par la société IXYS sous la référence "40N60". Ces transistors, ayant un temps de commutation particulièrement rapide donc des pertes thermiques raisonnables, peuvent être aisément montés au moyen d'une plaquette d'isolation en oxyde d'aluminium à plat sur le radiateur 50 tel qu'illustré sur les figures 2 et 3. Les dimensions nécessaires de ce radiateur ne dépassent alors pas 22cm de large pour 30cm de long. Les diodes 34 peuvent, par exemple, être celles commercialisées par la même société IXYS sous la dénomination "DSEI60 06A".

Dans le coin inférieur 3 laissé libre sur la face arrière du radiateur 50, on peut installer les deux résistances de "shunt" 12 pour la mesure du courant venant des batteries et, dans le coin supérieur 4, le condensateur volumineux d'entrée 37.

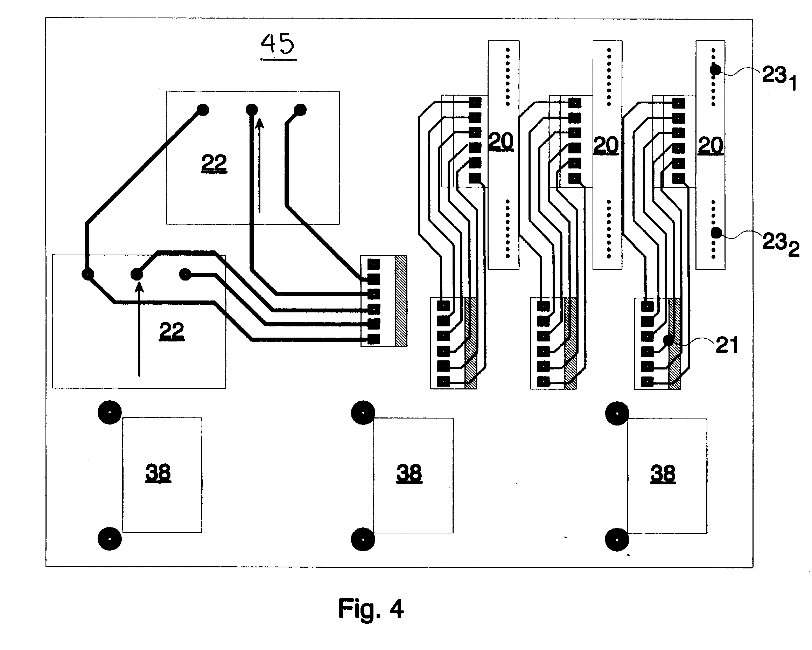

Sur la figure 4 est illustré, à une échelle sensiblement du double de celle des figures 2 et 3, la disposition de divers éléments sur une carte de support 45 installée peu au dessus des demi-barrettes 110, 120 parallèlement à la face arrière du radiateur 50. Cette carte 45 comprend d'abord, dans sa partie supérieure droite, trois emplacements parallèles dans lesquels sont enfichées les cartes de pilotage 20, une pour chaque phase. Chaque emplacement est lié à un connecteur 21 recevant un faisceau de liaison venant du circuit de commande adjacent 10. Sur le dessus de chaque carte de pilotage 20 sont ménagés deux autres connecteurs 23₁ et 23₂ pour les faisceaux de fils reliant les bases de transistors de puissance qui, incidemment, se retrouvent avantageusement très proches peu en dessous.

Cette carte 45 supporte également deux modules de lecture 22 de courant alternatif de sortie sur les phases A et B, chaque module étant traversé par un câble directement relié aux barrettes sous-jacentes A et B. Lorsque cette carte 45, après avoir été tournée d'un quart de tour, est installée au dessus de la partie gauche du radiateur 50, on constate qu'il est également possible d'installer sur cette carte trois condensateurs de rappel 38 de telle sorte qu'ils puissent être reliés directement entre les demi-barrettes 110 et 120 au niveau de leurs extrémités en vis-à-vis (voir également la figure 1).

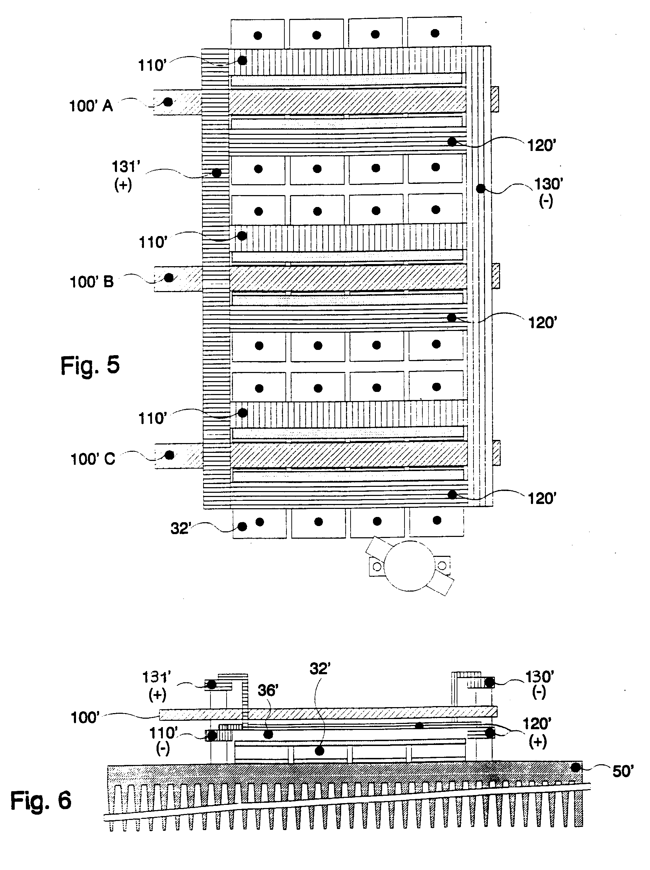

Sur les figures 5 et 6 est illustré un second mode d'implantation, selon l'invention, des transistors 32' de l'étage de puissance sur une radiateur 50'.

Cette implantation se différencie de la première du fait que les triplets de barrettes reliés en E et agencés en vis-à-vis ne sont pas disposés bout-à-bout, mais de manière imbriquée comme mieux visible sur la figure 5. Alors, et tel que vu sur la figure, le triplet en E de barrettes 120' reliées par leur traverse 131' d'alimentation positive est situé au-dessous de leur barre 100' de phase, et les groupes de transistors associés sont implantés au-dessous de leur barrette. De manière analogue, le triplet en E de barrettes 110' d'alimentation neutre ou négative est situé en dessous de leur barre 100' de phase, sensiblement dans le même plan que les barrettes 120', et les groupes de transistors associés sont implantés en dessous de leurs barrettes. Comme on peut aisément le comprendre, les triplets en E de barrettes 110' et 120' étant décalés, tel que vus du dessus sur la figure 5, ils peuvent également se situer à des niveaux différents, un triplet pouvant être agencé au dessus des barres de phases 100.

On peut monter ici des transistors IGBT avec leur diode intégrée en quatre gros boîtiers comme illustré, ou monter les transistors IGBT précédents avec la diode séparée en six boîtiers selon la disponibilité des composants et/ou l'espace à disposition.

Cette implantation permet de diminuer sensiblement de moitié la surface utilisée sur le refroidisseur pour y intégrer d'autres composants. Tout l'étage de puissance peut alors être monté en une unité de montage intégré sur le refroidisseur en tant que bloc complet pouvant être testé séparément du reste du convertisseur. Cet agencement permet également de diminuer les surtensions dues à la capacitance (self) du câblage. On simplifie alors les questions de fournitures mécaniques, et on obtient un gain en temps de montage et en qualité.

Comme mieux visible sur la figure 6, la distribution des signaux de commandes aux transistors IGBT peut se faire par l'intermédiaire de petits circuits imprimés agencés sous les barrettes, donc très proches de ces transistors. On réduit ainsi la longueur et la connectique du câblage par un facteur de l'ordre de trois ce qui accroît la clarté du montage, diminue le temps de câblage.

Comme on a pu le constater à la lecture de cet exposé, l'invention fournit un mode de réalisation aisément industrialisable d'un convertisseur courant-continu/courant-alternatif pouvant passer jusqu'à 150 Ampères efficaces, voire le double, et ce dans des dimensions raisonnables, tout à fait apte à être intégré au sein d'un véhicule électrique. Surtout, la fixation des éléments électroniques de puissance et des liaisons sur le dos du radiateur peut être réalisée sans autre de manière rigide pour que ce convertisseur reste fiable quelles que soient les vibrations subies par le véhicule, notamment au niveau des multiples soudures de pattes. De nombreuses améliorations peuvent être apportées à ce convertisseur dans le cadre de cette invention.

## Revendications

1. Convertisseur courant-continu/courant-alternatif de puissance pour véhicule électrique à moteur alternatif triphasé alimenté à partir de batteries comprenant
- un étage de puissance formé, pour chaque phase, par une paire de circuits électroniques de commutation montés en série entre une première ligne positive et une seconde ligne négative ou neutre d'alimentation en courant continu du dispositif, leur point commun constituant la ligne de phase,
- un circuit de pilotage pour chaque phase pilotant les circuits de commutation de telle sorte que chacun soit alternativement en l'état de conduction, et
- un circuit de contrôle variant l'action du circuit de pilotage pour moduler le courant traversant l'étage de puissance en fonction de paramètres externes dont la position d'une pédale d'accélérateur,
caractérisé en ce que chacun des circuits de commutation de l'étage de puissance est constitué d'un groupe identique de transistors (32) montés en parallèle,
et en ce que les groupes de transistors sont implantés selon un ou plusieurs triplets de paires de lignes parallèles, une paire de lignes pour chaque phase, au dos d'un radiateur (50) commun de telle sorte que, pour chaque phase,
- les points communs des transistors soient reliés à une première barre métallique (100A, 100B, 100C) adjacente, matérialisant une ligne de phase et fixée à un premier niveau sur le radiateur,
- les points d'alimentation d'un premier groupe de transistors soient reliés à une première barrette métallique (110,110') matérialisant la première ligne d'alimentation fixée à un second niveau sur le radiateur, et agencée parallèlement à la première barre,
- les points d'alimentation du second groupe de transistors soient reliés à une seconde barrette métallique (120,120') matérialisant la seconde ligne d'alimentation fixée au même second niveau ou en un troisième niveau sur le radiateur, et agencée parallèlement à la première barre
- chacun des deux triplets de barrettes étant respectivement relié en forme de E par une barrette transversale (130, 131, 130', 131').

2. Convertisseur selon la revendication 1, caractérisé en ce que deux triplets de barrettes reliés en forme de E sont agencés en vis-à-vis et bout-à-bout, la première barrette métallique (110) d'une phase étant agencée dans l'alignement de la première moitié de la première barre (100) de la phase, et la seconde barrette métallique (120) de cette phase étant agencée dans l'alignement de la seconde moitié de la première barre (100) et dans le prolongement de sa première barrette (110).

3. Convertisseur selon la revendication 2, caractérisé en ce que tous les transistors sont implantés selon un double triplet de lignes parallèles au dos d'un radiateur (50) commun, une paire de deux lignes pour chaque phase, chaque ligne étant située de part et d'autre de sa barrette correspondante.

4. Convertisseur selon la revendication 1, caractérisé en ce que les triplets de barrettes reliés en forme de E sont agencées en vis-à-vis et imbriqués l'une dans l'autre, une première barrette métallique (110') d'une phase étant agencée d'un premier côté de la première barre (100') de cette phase, et la seconde barrette métallique (120') de cette phase étant agencée de l'autre côté de la première barre (100') de cette phase.

5. Convertisseur selon l'une des revendications précédente, caractérisé en ce que des diodes (34), branchées en parallèle à un groupe de transistors (32), sont implantées dans chaque ligne, et ce intercalées au milieu de chaque groupe de transistors,

6. Convertisseur selon la revendication 2 ou 3, caractérisé en ce qu'une carte (45) supportant un triplet de circuit de pilotage (20) est placée directement sur le radiateur (50) peu au-dessus des barrettes de niveau supérieur.

7. Convertisseur selon la revendication 6, caractérisé en ce que la carte (45) supporte, de plus, des modules (22) de lecture du courant de sortie sur une phase.

8. Convertisseur selon la revendication 6, caractérisé en ce que la carte (45) supporte, de plus, des condensateurs (38) de rappel branchés entre la première et la deuxième ligne d'alimentation de chaque phase.
